# EUROPEAN PATENT APPLICATION

(11) **EP 0 874 093 A2**
(43) Date of publication of application: **28.10.1998**
(21) Application number: 98107267.1
(22) Date of filing: 21.04.1998
(51) Int. Cl.: E03D 1/00, F16K 31/26, F16K 47/02

(54) **Float valve for feeding water into a lavatory flush tank**

(30) Priority: 22.04.1997 IT TO970344
(71) Applicant: VALSIR S.p.A., 25078 Vestone (BS) (IT)
(72) Inventor: Fauciglietti, Renzo, 22063 Cantu' (IT)
(74) Representative: Cerbaro, Elena

(57) **Abstract**

A float valve (6) for feeding water into a lavatory flush tank (1), wherein a tubular body (45) for feeding water into the tank (1) has an end portion (46) through which is formed at least one water inlet opening (49); the water being guided to the inlet of the tubular body (45) in a direction substantially tangent to an inner surface (48) of the tubular body (45) and crosswise to an axis (20) of the tubular body (45).

## Description

The present invention relates to a float valve for feeding water into a lavatory flush tank.

More specifically, the present invention relates to a float valve of the type comprising a water inlet nozzle connected to the water mains; a tubular supply body for feeding water into the tank and having a respective axis and a water inlet; and supply means interposed between the nozzle and the tubular body to feed water to the tubular body inlet.

Though widely used, known valves of the above type have the disadvantage of being noisy.

This is substantially due to the geometry of the tubular supply body. That is, in known valves, water is fed into one end of the tubular supply body, i.e. in an axial direction, so that, along the whole of the tubular body, the water falls freely parallel to the axis of the tubular body and splashes noisily against the bottom wall of the tank or in the mass of water already inside the tank.

It is an object of the present invention to provide a straightforward, low-cost float valve designed to overcome the aforementioned drawback.

According to the present invention, there is provided a float valve for feeding water into a lavatory flush tank, the valve comprising a tubular body for feeding water into the tank and having a respective axis and a water inlet; and supply means connected hydraulically to the inlet of said tubular body to feed a stream of water to the inlet; characterized in that said inlet is formed through a portion of said tubular body.

The valve defined above preferably comprises guide means for feeding said stream of water into said tubular body through said inlet in a direction substantially tangent to an inner surface of the tubular body and crosswise to said axis.

A non-limiting embodiment of the invention will be described by way of example with reference to the accompanying drawings, in which:
Figure 1 shows a partial section of a lavatory flush tank fitted with a float valve in accordance with the teachings of the present invention;
Figure 2 shows a larger-scale section along line II-II in Figure 1;
Figure 3 shows a variation of a detail in Figure 2;
Figure 4 shows a section along line IV-IV in Figure 2.

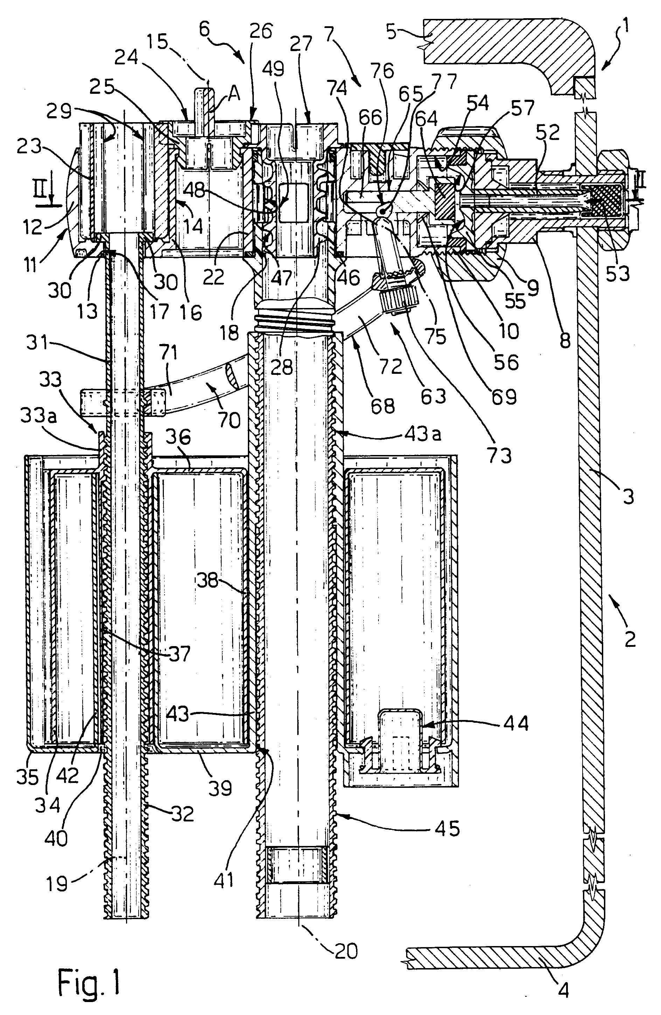

Number 1 in Figure 1 indicates as a whole a lavatory flush tank comprising a hollow body 2, which in turn comprises a lateral wall 3 and a bottom wall 4 connected to each other, and a top opening closed by a lid 5.

Tank 1 houses a float valve 6 for feeding water into tank 1; a known discharge valve (not shown) for discharging the water in tank 1 into a lavatory (not shown); and a known control unit (not shown) for controlling the discharge valve.

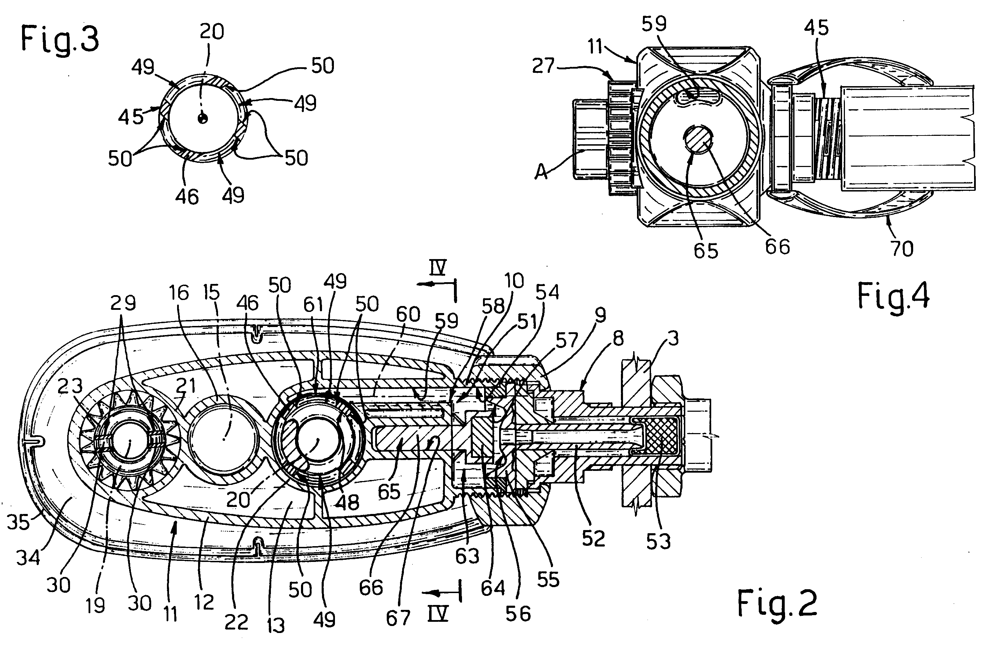

With reference to Figures 1 and 2, valve 6 comprises an elongated element 7, which extends parallel to bottom wall 4, is located adjacent to lid 5, and is connected integrally in known manner to lateral wall 3.

More specifically, and as shown in Figures 1 and 2, elongated element 7 comprises a first tubular connecting body 8, one end portion of which is connected integrally to wall 3 in known manner, and an opposite end portion of which is connected integrally, by means of a threaded ring nut 9, to an externally threaded collar 10 of a second hollow body 11.

Hollow body 11 is open at the top, and comprises a lateral wall 12, and a bottom wall 13, which has a first circular opening 14 formed coaxially with an axis 15 and surrounded by a tubular body 16 extending inside hollow body 11 and coaxial with axis 15.

Bottom wall 13 also has a further two circular openings 17 and 18, which are formed on either side of opening 14, are coaxial with respective axes 19 and 20 parallel to axis 15, and are surrounded by respective tubular cylindrical bodies 21 and 22 extending coaxially with respective axes 19 and 20.

Body 21 houses a first gear 23 rotating about axis 19 and having outer teeth which mesh with outer teeth of a second gear 24 projecting upwards beyond body 16. Gear 24 is activated manually from the outside, for example by means of a knob A, and has a hub 25, which extends inside body 16 and is connected to body 16 so as to rotate in axially-fixed manner about axis 15.

Gears 23 and 24 form part of a gear transmission 26, which also comprises a further gear 27 rotating about axis 20 and having outer teeth meshing with the teeth of gear 24, and a hub 28 extending loosely inside body 22.

Gear 23 is fitted integrally with a straight guide 29, which extends parallel to axis 19 and is fitted in sliding manner with two tabs 30 connected integrally in diametrically-opposed positions to an end portion of a hollow rod 31.

Rod 31 loosely engages opening 17, extends towards wall 4 coaxially with axis 19, and has an externally threaded end portion 32 opposite the end portion connected to tabs 30. Portion 32 defines the screw of a screw-nut screw assembly 33, which also comprises a nut screw 33a connected to the screw and connected integrally to a float 34.

Float 34 is defined by a shaped hollow body, which has an opening facing bottom wall 4, and is housed loosely inside a tank 35 substantially complementary in shape to that of float 34 (Figure 2) and having an opening facing lid 5.

Float 34 is movable with respect to tank 35 in a direction parallel to axes 19 and 20, and has an end wall 36, and two elongated tubular portions 37 and 38 connected integrally to end wall 36 and extending towards bottom wall 4 of tank 1 coaxially with respective axes 19 and 20.

Tank 35 comprises a bottom wall 39 having two openings 40 and 41 surrounded by respective inner elongated tubular portions 42 and 43 connected integrally to bottom wall 39 and extending upwards coaxially with respective axes 19 and 20. Tubular portion 42 is connected telescopically to portion 37; and portion 38 is connected telescopically to portion 43, which has an internally threaded top end portion.

As shown in Figure 1, bottom wall 39 of tank 35 has a further opening adjacent to opening 41 and engaged by a known valve 44 (not described in detail) which, in use, is maintained closed by the water in tank 1.

As shown in Figure 1, the end portion of portion 43 forms part of a screw-nut screw assembly 43a, which also comprises a screw defined by a portion of a tube 45 for feeding water into tank 1.

Tube 45 extends coaxially with axis 20, and terminates at the top with a cylindrical portion 46 engaging in rotary, axially-fixed manner body 22 of elongated element 7.

Portion 46 is fitted in angularly integral manner with gear 27, the hub 28 of which extends inside portion 46, has an outside diameter approximately equal to but no larger than the inside diameter of portion 46, and has a spiral groove 47 formed on the outer surface of hub 28 and which, in use, provides for guiding a stream of water along a spiral path tangent to the inner surface 48 of portion 46 of tube 45.

Portion 46 also has a number of - in the example shown, four - through openings 49 (Figures 1 and 2) distributed about portion 46 along a flat circumferential line, and each defined by two respective flat surfaces 50 forming an angle of substantially 90° (Figure 2).

Alternatively, as shown in Figure 3, surfaces 50 slope substantially circumferentially, and at least one of surfaces 50 is substantially tangent to inner surface 48 of portion 46 of tube 45. In a variation not shown, both surfaces 50 defining the same opening 49 are substantially tangent to surface 48.

With reference to Figure 2, at least one of openings 49 defines, in use, the inlet through which a stream of water is fed into tube 45. The stream of water is fed to said inlet by a hydraulic supply circuit 51, which comprises a nozzle 52 extending through tubular body 8 and having an inlet connected in known manner to the water mains (not shown) via the interposition of a filter 53.

Nozzle 52 has an outlet which terminates inside a chamber 54 defined on one side by body 11 and on the other by a wall 55. Wall 55 has an outer flange gripped in fluidtight manner between bodies 8 and 11, and is defined at the front, on the side facing away from filter 53, by a surface comprising a conical bottom portion 56 surrounding and tapering towards the outlet of nozzle 52, and a conical lateral portion 57 connected to and tapering towards bottom portion 56.

As shown in Figure 2, chamber 54 communicates with an inlet 58 of a straight conduit 59, which forms part of circuit 51 and has an axis 60 perpendicular to axes 19 and 20 and separated from the plane of axes 19 and 20 by such a distance as to intersect portion 46 in a region adjacent to inner surface 48 of portion 46. Conduit 59 also has a cross section at least three times the cross section of the passage of nozzle 52; and an outlet 61, which partly surrounds portion 46, communicates with the inside of portion 46 through at least one of openings 49, and is so formed as to cooperate, in use, with surfaces 50 to guide and feed the stream of water into portion 46 in a direction substantially tangent to inner surface 48 of portion 46.

As shown in Figures 1 and 2, water supply to tube 45 is controlled by a tap device 63, which forms part of circuit 51 and comprises a known plug element 64 housed inside chamber 54, and a sleeve 65 supporting plug element 64.

Sleeve 65 comprises a head housed inside chamber 54 and carrying plug element 64; and a shank 66 aligned with nozzle 52 and engaging a sliding seat 67 formed in an intermediate portion of body 11.

By means of a lever actuating device 68, sleeve 65 is movable between a forward closed position in which plug element 64 is forced against bottom surface 56 to close the outlet of nozzle 52 and prevent water from flowing into chamber 54 and to tube 45, and a withdrawn open position in which plug element 64 is detached from the outlet of nozzle 52 and the head of sleeve 65 presses a seal 69 against a shoulder of body 11.

As shown in Figure 1, actuating device 68 comprises a first fork lever 70, an end portion 71 of which is connected to an intermediate portion of rod 31 so as to move, together with rod 31 and along axis 19, between a raised position corresponding to the forward closed position of sleeve 65, and a lowered position corresponding to the withdrawn open position of sleeve 65. At the opposite end to portion 71, fork lever 70 also has an end portion 72 connected integrally to an end portion of a further lever 73, which forms part of actuating device 68 and forms with fork lever 70 a given angle of less than 180°.

At the opposite end to that connected to fork lever 70, lever 73 has an end portion 74 hinged to said intermediate portion of body 11 by a hinge not shown, so as to rotate about an axis 75 (Figure 1) perpendicular to the plane of axes 19 and 20.

End portion 74 is fitted integrally with a tear-shaped cam 77, which projects from end portion 74, is eccentric with respect to an axis of lever 73, and rests against an axial shoulder formed on sleeve 65.

Operation of valve 6 will now be described as of the Figure 1 condition in which tank 1 is empty, so that float 34 and end portion 71 of lever 70 are both in the lowered position, and sleeve 65 is maintained in the withdrawn position by actuating device 68.

When water is supplied, as of the above condition, the water flows along nozzle 52, through chamber 54 and into conduit 59.

Given the particular location of outlet 61 of conduit 59, the water at the outlet of conduit 59 first interacts with surfaces 50 and then flows into tube 45 tangent to inner surface 48 of portion 46.

At this point, even without hub 28 and spiral groove 47, the water already has sufficient kinetic energy to flow down tube 45 along a substantially spiral path.

Given groove 47, however, the water at the outlet of conduit 59 is further guided by surfaces 50 into groove 47 which forces the water to flow along the given path imposed by groove 47 itself; and, at the outlet of groove 47, the water continues flowing down tube 45 substantially tangent to inner surface 48 of tube 45.

The particular location of outlet 61 of conduit 59 with respect to axis 20 of tube 45, and the formation inside tube 45 itself of openings 49 by which to feed the water into tube 45, therefore force the water to flow down tube 45 along a spiral path, as opposed to falling freely along an axial and therefore practically vertical path.

The spiral path along which the water flows down tube 45 is obviously not merely the result of groove 47, but is mainly determined by the water flowing into tube 45 in a direction substantially tangent to the inner surface of tube 45 and crosswise to axis 20 of tube 45.

This therefore provides for reducing the noise caused by direct impact of the water on bottom wall 4 of tank 1, when tank 1 is empty, or on the surface of any water already inside tank 1. That is, the water issuing from tube 45 interacts with, by flowing in an inclined direction with respect to, bottom wall 4 of tank 1 or the surface of the water.

Clearly, changes may be made to valve 6 as described and illustrated herein without, however, departing from the scope of the present invention.

In particular, as stated, spiral groove 47 may be dispensed with; and hub 28 may be so formed as to very loosely engage portion 46, or even be so sized as to merely connect the gear 27 to portion 46.

Moreover, tank 35 and adjusting assembly 43a of valve 6 may be dispensed with, and the float may be connected to sleeve 65 otherwise than as described.

Finally, tube 45 may be replaced by a fixed tube, still, however, comprising openings 49, which may be located otherwise than as described by way of example.

## Claims

1. A float valve (6) for feeding water into a lavatory flush tank (1), the valve (6) comprising a tubular body (45) for feeding water into the tank (1) and having a respective axis and a water inlet (49); and supply means (51) connected hydraulically to the inlet (49) of said tubular body (45) to feed a stream of water to the inlet (49); characterized in that said inlet (49) is formed through a portion of said tubular body (45).

2. A valve as claimed in Claim 1, characterized by comprising guide means (50, 59) for feeding said stream of water into said tubular body (45) through said inlet (49) in a direction substantially tangent to an inner surface (48) of the tubular body (45) and crosswise to said axis (20).

3. A valve as claimed in Claim 2, characterized in that said guide means (50, 59) comprise a conduit (59) having an outlet (61) substantially tangent to the portion (46) of said tubular body (45) and communicating with the inlet (49) of the tubular body (45).

4. A valve as claimed in Claim 3, characterized in that said conduit (59) has an axis (60) crosswise to the axis (20) of the tubular body (45) and separated by a distance from the axis (20) of the tubular body (45).

5. A valve as claimed in Claim 3 or 4, characterized in that said supply means comprise a nozzle (52) connected to a water mains and communicating with said conduit (59); the conduit (59) having a cross section greater than the cross section of said nozzle (52).

6. A valve as claimed in any one of the foregoing Claims, characterized in that said guide means (50, 59) comprise deflecting means (50) in said inlet (49).

7. A valve as claimed in Claim 6, characterized in that said inlet (49) is defined laterally by at least one flat surface (50); said surface (50) defining at least part of said deflecting means.

8. A valve as claimed in Claim 7, characterized in that said surface (50) extends in a direction substantially tangent to an inner surface (48) of the portion (46) of said tubular body (45).

9. A valve as claimed in one of the foregoing Claims from 2 to 8, characterized by comprising further guide means (47) located inside said tubular body (45) and for feeding said stream of water along a spiral path.

10. A valve as claimed in any one of the foregoing Claims, characterized in that said portion (46) of the tubular body (45) has a number of through openings (49); at least one of said openings (49) defining said inlet.

11. A valve as claimed in Claim 10, characterized in that said openings (49) are distributed on said portion (46) along a flat circumferential line.

12. A valve as claimed in Claim 11, characterized in that said tubular body (45) rotates about its own axis (20), and may be set to a number of angular operating positions; said openings (49) being so distributed along said line that, in each of said operating positions, said tubular body (45) always communicates with said supply means (51) via at least one of the openings.
